# FASCICULE DE BREVET EUROPEEN

(11) **EP 1 948 535 B1**
(45) Date de publication et mention de la délivrance du brevet: **29.07.2020**
(21) Numéro de dépôt: 06831011.9
(22) Date de dépôt: 25.10.2006
(51) Int. Cl.: B65F 1/00, B65F 1/14, B29C 65/08, B29C 65/22, B29C 65/38, B29C 65/00, B65B 67/12, B29L 31/00

(54) **SAC POUR UN DISPOSITIF POUR COLLECTER DES DECHETS, NOTAMMENT DES DECHETS HOSPITALIERS**
BEUTEL FÜR EINE ABFALLSAMMELVORRICHTUNG, INSBESONDERE FÜR KRANKENHAUSABFALL
BAG FOR A WASTE COLLECTING DEVICE, IN PARTICULAR HOSPITAL WASTE

(30) Priorité: 28.10.2005 FR 0511068
(43) Date de publication de la demande: 30.07.2008
(73) Titulaire: SUEZ RV France, 92040 Paris La Défense Cedex (FR)
(72) Inventeur: BALAZUN, Claude, F-92700 Colombes (FR); CORBIN, Jean Yves, F-14610 Thaon (FR); D'ESTAIS, Mathias, F-14610 Cairon (FR)
(74) Mandataire: IPAZ
(86) Numéro de dépôt international: PCT/FR2006/002397
(87) Numéro de publication internationale: WO 2007/048925

(56) Documents cités:
- DE-A- 10 257 596
- US-A- 4 592 192
- US-A- 5 027 578

## Description

L'invention est relative à un sac jetable pour un dispositif pour collecter des déchets, dispositif du genre de ceux qui comprennent un sac jetable ayant une ouverture de remplissage, un support de sac essentiellement vertical comportant en partie haute un cadre sensiblement horizontal auquel peut être accroché le sac et un moyen de fermeture du sac après remplissage.

L'invention concerne plus particulièrement, mais non exclusivement, un sac jetable et un tel dispositif pour collecter des déchets fortement compressibles et/ou des déchets hospitaliers d'activité de soins à risques infectieux, désignés en abrégé par le sigle DASRI.

Pendant longtemps les déchets hospitaliers d'activité de soins à risques infectieux ont été compactés dans les services hospitaliers par de gros compacteurs mécaniques verticaux à piston. Des salissures se développaient sur la machine elle-même, en particulier sur le piston, et facilitaient la transmission de germes. La lutte contre les maladies nosocomiales a eu raison de ces systèmes.

L'arrêt des compacteurs a fait exploser le prix du traitement des déchets hospitaliers car les déchets de soins sont volumineux (compresses, emballages, non tissés...) et leur traitement se fait par un circuit sécurisé réglementé et très coûteux. Aucune compaction ne peut avoir lieu ni en amont, ni en aval, et quasiment aucune intervention humaine, par exemple regroupement de sacs, ne peut non plus avoir lieu.

On a donc cherché à réduire le volume déchets tout en conservant, voire en améliorant, les qualités d'hygiène et d'ergonomie.

On connaît d'après US 5027578 A, un sac jetable selon le préambule de la revendication 1, et aussi un dispositif pour emballer des déchets, le dispositif comprenant un sac jetable ayant une ouverture de remplissage, un support de sac essentiellement vertical, et un moyen de fermeture du sac après remplissage. Un moyen d'aspiration est prévu pour évacuer une partie du volume d'air contenu dans le sac, et un moyen d'assemblage est prévu pour assurer la fermeture du sac par soudure. Toutefois, cet agencement ne permet pas une aspiration de l'air hors du sac, lorsque ce dernier est scellé.

On connaît, d'après FR 2 855 506, au nom de la même société déposante, un dispositif de compactage de déchets faisant intervenir une paroi latérale constituée par un assemblage de plaques ou lames rigides articulées les unes par rapport aux autres de manière à constituer un tablier déformable. Ce dispositif privilégie le compactage pour réduire le plus possible le volume des déchets en s'efforçant toutefois d'assurer des conditions d'hygiène et de sécurité acceptables pour la plupart des types de déchets. Néanmoins, sa structure et en particulier le sac enveloppe et les systèmes de béliers directement en contact avec les déchets, ne sont pas compatibles avec la gestion des DASRI.

WO87/04686 propose un dispositif avec sac posé sur un cadre et un couvercle intégrant l'aspiration. Un tel dispositif est incompatible avec des déchets type DASRI car les déchets sont plaqués sur le couvercle et sur la trompe d'aspiration donc pollution de l'appareil. Par ailleurs, ce principe est destiné à des cycles répétitifs de compression, la fermeture étant opérée manuellement et à l'air libre par l'utilisateur lorsqu'il constate que le sac est plein. Cette démarche ne solutionne pas les besoins en matière d'ergonomie pour la fermeture du sac et les manipulations annexes. De plus, le fait de fermer le sac à l'air libre est très peu efficace pour des déchets de type DASRI car s'agissant de matériau tels que non-tissés, compresses et emballages légers, ils ont un effet mémoire très important et reprennent leur volume dès qu'ils ne subissent plus de pression.

L'invention vise à fournir un sac jetable et un dispositif qui permettent de faciliter la gestion des déchets, notamment des déchets de soins hospitaliers en prenant en compte de manière primordiale les questions d'hygiène et de sécurité. Il est souhaitable que le dispositif soit simple et robuste, et d'un prix de revient acceptable.

Cet objectif est atteint grâce à un sac jetable selon la revendication 1.

Selon l'invention, l'élément de paroi souple constitue un couvercle de sac rabattable avec un orifice, en particulier dans sa zone centrale, pour permettre une aspiration à travers l'élément de paroi souple en position de fermeture. Le sac est réalisé en une seule découpe. Des caractéristiques avantageuses de l'invention sont inclues dans les revendications dépendantes.

Par exemple, le cadre sensiblement horizontal du dispositif pour collecter des déchets selon la revendication 5 peut être fixé sur un piètement ou similaire, et le sac jetable est libre de toute enveloppe. Le sac reste accessible, n'étant pas enfermé dans un récipient, par exemple un récipient rigide cylindrique, ce qui évite tout confinement non hygiénique.

Avantageusement, le moyen d'aspiration est propre à créer une dépression au niveau d'une ouverture prévue dans la face interne d'un couvercle technique, la zone d'aspiration correspondant à l'ouverture étant une zone centrale.

De préférence, a valve est prévue dans la région centrale de l'élément de paroi souple de fermeture, et l'ouverture du couvercle technique vient coiffer la valve. La valve peut être constituée par une avancée en deux dimensions lorsque le sac est à plat, ayant la forme d'un appendice sensiblement tronconique lorsqu'elle est déployée, ouverte à sa petite base et attenante par sa grande base à la paroi souple de fermeture du sac, la valve empêchant une entrée d'air dans le sac après séparation du moyen d'aspiration.

Selon l'invention, l'élément de paroi souple constituant le moyen de fermeture est attenant au sac selon un bord de l'ouverture du sac formant charnière.

Le moyen de fermeture peut être prévu pour assurer une fermeture du sac par pincement.

De préférence, le couvercle technique est rabattable sur le cadre et équipé d'un moyen d'assemblage pour assurer la fermeture du sac par réunion de l'élément de paroi souple à des parties du sac.

Le moyen d'assemblage peut être un moyen de chauffage par impulsions pour réaliser un thermoscellage.

Avantageusement, le moyen d'assemblage est formé par un moyen de soudure qui présente un contour en U pour souder les parties de l'ouverture du sac autres que celle servant de charnière à l'élément de paroi souple de fermeture. Le moyen de soudure peut comprendre des segments rectilignes distincts conducteurs électriquement se succédant à angle droit, en contact électrique à leurs extrémités.

En variante, le moyen de soudure peut être un dispositif à ultrasons. Généralement, le moyen d'aspiration comprend un aspirateur propre à établir une dépression comprise entre - 0.1 bar et - 0.3 bar, avec un débit de l'ordre de 50 litres à 500 litres par minute.

Avantageusement, le moyen d'aspiration comporte une trompe d'aspiration propre à entourer la valve à l'état fermé et à provoquer son ouverture par une aspiration annulaire de la surface extérieure de la valve.

Le couvercle technique et le moyen d'aspiration peuvent former une unité qui peut être séparée de la structure porteuse du sac. La structure porteuse peut être équipée d'un couvercle léger qui est ajouré pour laisser agir un moyen de soudure.

Le dispositif peut comprendre un support de sac comportant un cadre flottant permettant d'éviter un effet d'écrasement du sac lors de la soudure.

Le dispositif peut comporter une carte électronique prévue pour commander, après fermeture du couvercle technique, un cycle comportant les étapes suivantes :
- un ordre de soudure de la feuille sur le sac est donné pour fermer le sac ;
- le cycle de soudure est déclenché et comprend une période de chauffe, suivi d'une pause, afin de refroidir les soudures et d'éviter un déchirement des soudures dues à la traction produite par l'aspiration sur le sac,
- le cycle d'aspiration est ensuite déclenché, un réglage de la durée d'aspiration étant prévu pour permettre à chaque utilisateur de paramétrer le dispositif selon les déchets à traiter.

De préférence, le sac jetable comporte une valve prévue sur l'élément de paroi souple de fermeture pour permettre un raccordement à un moyen d'aspiration.

Avantageusement, la valve est constituée par une avancée, en deux dimensions lorsque le sac est à plat, ayant la forme d'un appendice sensiblement tronconique lorsqu'elle est déployée, ouverte à sa petite base et attenante par sa grande base à une paroi du sac, la valve empêchant une entrée d'air dans le sac après séparation du moyen d'aspiration. La valve peut être générée lors de la fabrication du sac, par la soudure et la découpe du sac. La valve est prévue dans la région centrale de l'élément de paroi souple de fermeture.

Le moyen d'assemblage est avantageusement formé par un moyen de soudure prévu pour souder l'élément de paroi souple sur des parties du sac.

Le dispositif selon l'invention permet de réduire le volume des déchets, sans exercer un compactage violent, et d'automatiser la fermeture du sac, ce qui facilite la gestion des déchets.

L'élément de paroi souple du moyen de fermeture peut être prévu pour recouvrir des parties de l'ouverture du sac rabattues sur le contour du cadre et pour y être assemblé.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs.

Sur ces dessins :
Fig. 1 est une vue en perspective d'un support de sac d'un dispositif selon l'invention.
Fig. 2 est une vue en plan, avec partie arrachée, d'un sac en film plastique pour le dispositif de l'invention.
Fig. 3 est une vue en perspective du sac ouvert, avec bord de l'ouverture rabattu pour être installé sur le support de Fig.1.
Fig. 4 est une vue schématique en perspective d'un moyen de fermeture constitué par un élément de paroi souple.
Fig. 5 est une vue en perspective du support équipé d'un sac neuf, vide.
Fig. 6 est une vue en perspective du dispositif avec couvercle technique rabattu pour aspiration d'une partie du volume d'air du sac rempli et fermeture par soudure,
Fig. 7 est une vue en perspective d'une variante du dispositif dans laquelle le couvercle technique et le moyen d'aspiration peuvent être séparés du support.
Fig. 8 est une vue en perspective d'une variante du dispositif de Fig.7 selon laquelle le support de sac comporte un couvercle léger et ajouré, et
Fig.9 est une section à plus grande échelle selon la ligne IX-IX de Fig.8 après fermeture du sac.

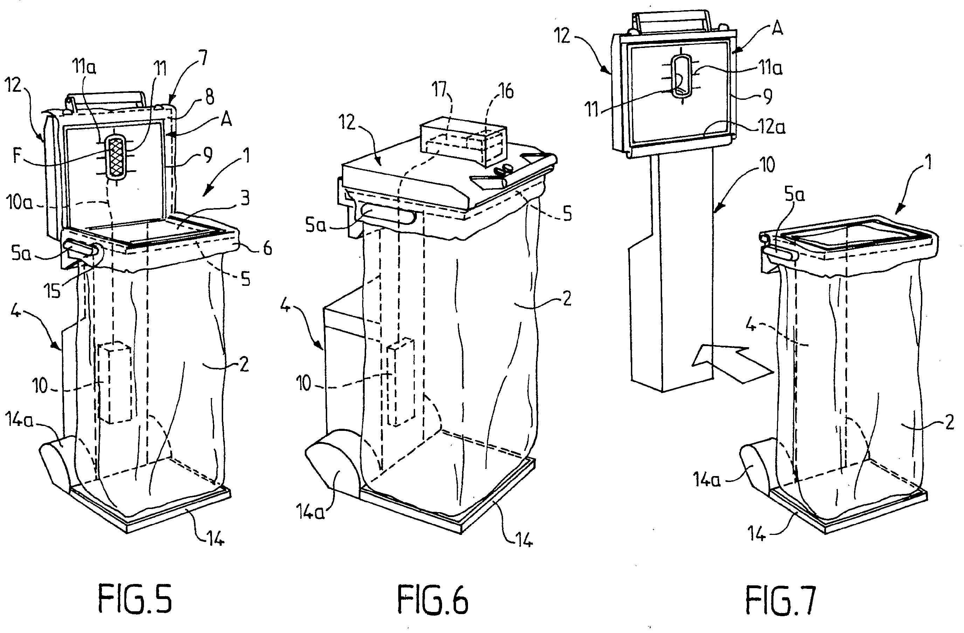

En se reportant aux dessins, notamment à Fig.5, on peut voir un dispositif 1 pour collecter des déchets, spécialement des déchets hospitaliers d'activité de soins à risques infectieux. Ce dispositif comprend un sac jetable 2 ayant une ouverture (ou gueule) de remplissage 3, un support de sac 4 essentiellement vertical comportant en partie haute un cadre 5 sensiblement horizontal par exemple de forme polygonale, notamment rectangulaire ou carrée, ou circulaire. Le sac 2 peut être accroché au cadre 5 par rabattement d'une partie 6 du bord de l'ouverture 3 sur le contour du cadre. Selon une variante, un élément de serrage du périmètre de l'ouverture du sac sur le cadre peut être prévu pour attacher le sac au cadre. Selon une autre variante, le sac peut être accroché par coincement d'un ou plusieurs rabats sur le cadre, ou par utilisation d'un matériau adhérent. Le sac 2 est totalement accessible, et libre de toute enveloppe rigide, telle qu'un récipient cylindrique rigide qui l'entourerait. On évite ainsi tout confinement non hygiénique.

Un moyen de fermeture 7 du sac est prévu lorsque le remplissage du sac en déchets est suffisant ou lorsqu'une fermeture temporaire du sac est souhaitée, notamment pour limiter les odeurs ou cacher de la vue les déchets. Ce moyen de fermeture 7 comprend un élément de paroi souple 8 avantageusement constitué par une feuille de la même matière plastique que le sac 2, propre à s'appliquer contre la partie rabattue 6.

Un moyen d'assemblage A, notamment formé par un moyen de soudure 9, est prévu pour réaliser la fermeture du sac 2 par réunion de l'élément de paroi souple 8 avec les parties rabattues 6. En variante, le moyen d'assemblage peut être un agent adhérent.

L'élément de paroi souple 8 comporte un orifice, de préférence dans sa région centrale, pour permettre une aspiration d'air à travers l'élément 8 en position de fermeture du sac.

Le support 4 comporte un moyen d'aspiration 10 propre à créer une dépression au niveau d'une ouverture 11 prévue dans la face interne d'un couvercle technique rabattable 12, articulé sur le cadre 5.

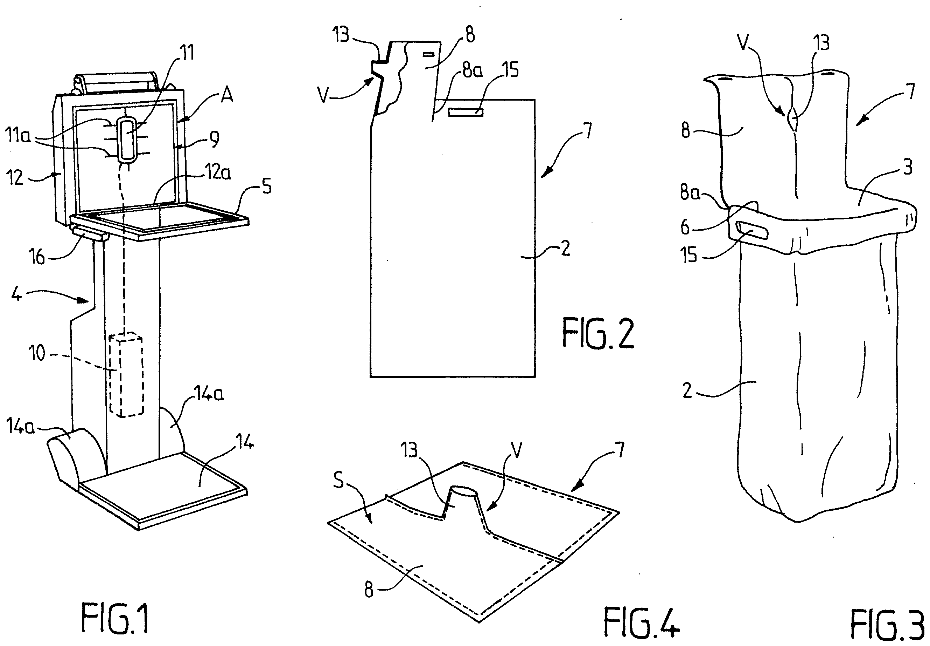

Le sac 2 est réalisé en un film de matière plastique, notamment de polyéthylène, en une seule découpe. L'élément de paroi souple 8 constitue un prolongement d'une partie de la paroi du sac comme illustré sur Fig. 3. L'élément de paroi souple 8 est alors attenant à l'un des côtés de l'ouverture 3 et constitue un couvercle de sac rabattable. Le sac est stocké à plat comme illustré sur Fig. 2 et présente une découpe 8a déterminant la zone charnière de l'élément 8.

En variante ne pas envisagée par la présente invention, le couvercle de sac pourrait être constitué d'une simple feuille S (Fig.4) séparée, mise en place individuellement. Dans ce cas, les éléments 8 formant couvercles peuvent être présentés en rouleau prédécoupé et être détachés au fur et à mesure. Selon une autre variante, la fermeture du sac 2 peut être réalisée par pincement, c'est-à-dire en rapprochant l'une contre l'autre, par une pince non représentée, les parois sensiblement verticales du sac 2 accroché au cadre 5 au voisinage de ce cadre, et en soudant ces parois entre elles.

La présence d'un couvercle rabattable 8 permet d'optimiser le volume utile des déchets, et de ne pas coincer les déchets lors de la fermeture du sac 2. Le couvercle rabattable 8 permet d'offrir une zone de soudure en périphérie du couvercle.

Une valve V est prévue en une zone des parois du sac 2 pour permettre un raccordement au moyen d'aspiration 10, la valve V empêchant une entrée d'air dans le sac après séparation du moyen d'aspiration 10.

La valve V est avantageusement réalisée par une avancée 13 en deux dimensions lorsque le sac est à plat comme illustré sur Fig. 2. Cette avancée 13 forme un appendice sensiblement tronconique lorsqu'elle est déployée comme illustré sur Fig. 4, ouverte à sa petite base et attenante par sa grande base à une paroi du sac. De préférence, cette avancée 13 du type « trompe anti-retour » est générée lors de la fabrication du sac, par la soudure et la découpe du sac. L'avancée 13 est avantageusement prévue sur l'élément de paroi souple de fermeture 8, notamment dans la région centrale de cet élément de fermeture. La valve V ainsi réalisée peut être totalement intégrée au sac sans surcoût, ni pour le sac ni pour le dispositif.

La forme tronconique de l'avancée 13 lui donne une aptitude à l'ouverture sous l'effet de l'aspiration. Le sac comporte avantageusement des graphismes permettant de visualiser et localiser l'avancée 13 même lorsqu'elle est rabattue ou couchée.

En variante, la valve V pourrait être située sur une partie du sac autre que le couvercle, par exemple sur l'une des parois verticales. La valve d'aspiration pourrait aussi être prévue dans le fond du sac ou sur une paroi latérale ou à un angle entre deux parois.

Selon une autre variante, la valve V pourrait être constituée par un clapet inséré dans une zone des parois du sac, par exemple dans le couvercle du sac ou une partie du corps du sac. Dans ce cas, il faut prévoir une opération de soudage du clapet sur le sac, ce qui complique la fabrication par rapport à la solution de l'avancée 13 en deux dimensions.

Selon une autre variante, l'aspiration peut se faire par une zone non scellée du couvercle 8 ou du corps du sac 2. Le couvercle du sac est ensuite scellé.

Un filtre F (Fig.5) de type gaze est avantageusement positionné en amont de la valve d'aspiration.

La disposition de la valve d'aspiration en partie supérieure du sac, sur le plan horizontal correspondant à l'élément de fermeture 8, permet de capter l'air au plus loin de chaque paroi et des déchets, et d' éviter que la valve ne soit obstruée. Cette disposition permet de retarder le contact entre les déchets et la zone centrale du couvercle.

Le moyen d'aspiration 10 comprend de préférence un aspirateur pour établir une dépression relativement réduite par exemple comprise entre - 0,1 bar et - 0,3 bar avec un débit de l'ordre de 50 à 500 litres par minute, avantageusement de 200 litres par minute environ. Le moyen d'aspiration 10 peut être logé à l'intérieur d'une colonne formant le support 4 du dispositif 1. Un socle 14 comportant des roulettes, masquées par des carters 14a, est solidaire du support 4. En variante, le moyen d'aspiration peut être intégré au couvercle technique 12. Selon une autre variante (Fig.7), le moyen d'aspiration 10 peut être détaché du support vertical 4 et du socle 14.

Le sac 2 intègre des poignées constituées par des lumières oblongues 15 prévues en bordure de l'ouverture 3 et situées au-dessous du cadre 5 après rabattement comme illustré sur Fig. 5 et 6. Des saillies 5a sont prévues en bordure inférieure du cadre 5 pour s'engager dans les lumières 15 et assurer l'accrochage du sac.

Pour la collecte de déchets hospitaliers, le volume du sac est avantageusement de 110 litres, le sac étant réalisé en un film de polyéthylène de 45 microns d'épaisseur.

Pour d'autres usages, le volume du sac peut être augmenté sensiblement. Par exemple pour la collecte de feuilles mortes ou de déchets de restauration collective ou autre application, on pourra choisir un sac de grand volume par exemple 240 litres ou même 400 ou 800 litres. Pour des usages particuliers, la résistance du sac peut être choisie plus élevée, notamment pour assurer une meilleure garantie d'étanchéité. On pourra par exemple choisir du polyéthylène de 80 ou 120 microns d'épaisseur.

Le moyen d'aspiration 10 est relié par une canalisation flexible 10a, schématiquement représentée, à l'orifice 11 prévu dans le couvercle technique 12. Cet orifice 11 coiffe la valve formée par l'avancée 13, lors de l'application de l'élément de paroi 8 contre le couvercle technique 12 comme illustré sur Fig.6.

La fermeture étanche du sac après remplissage est réalisée à l'aide du moyen de soudure 9 prévu sur la face interne du couvercle technique 12 du support rabattable. De préférence le moyen de soudure 9 est conçu pour réaliser une soudure thermique par impulsions. Ce moyen de soudure 9 peut comprendre, sous le couvercle technique 12, un fil résistif chauffant gainé de matière anti-adhérente résistante à la chaleur, par exemple du type polytétrafluoréthylène. Le moyen de soudure 9 s'étend suivant la partie de la périphérie du couvercle technique correspondant au cadre 5, autre que la zone 12a correspondant à la charnière du couvercle 8 rabattable. Sur la zone du cadre 5 qui est recouverte par la partie à souder du sac, on peut prévoir une couche de matière anti-adhérente résistant à la chaleur, par exemple du type polytétrafluoréthylène.

Pour un cadre 5 rectangulaire, le moyen de soudure 9 présente un contour en U pour souder les trois côtés de l'ouverture du sac 2 autres que celui servant de charnière. Le contour en U peut comprendre trois segments rectilignes conducteurs électriquement, se succédant à angle droit, joints par leurs extrémités. Ces segments rectilignes peuvent être formés par des bandes plates électriquement conductrices, en particulier des bandes de feuillard métallique résistif, notamment d'aluminium.

La soudure thermique par impulsions permet une disponibilité immédiate. Elle permet aussi de refermer le couvercle technique 12 du support, sans qu'il y ait soudure non souhaitée. Des zones brûlantes en dehors du temps de soudage sont évitées, ce qui sécurise l'appareil. Le temps de soudure peut être maîtrisé sans faire appel à l'appréciation de l'opérateur ou à une automatisation mécanique.

En variante, le moyen de soudure 9 pourrait être constitué par un dispositif de soudure par ultrasons.

La pression du couvercle technique 12 sur le cadre 5 pour la soudure peut être générée soit par la masse du couvercle technique 12, soit par des électroaimants assurant une garantie de fermeture et de soudure. Il est également possible de faire exercer la pression de soudure par l'utilisateur qui appuie sur le couvercle technique du dispositif. En variante on peut prévoir un loquet mécanique que l'utilisateur doit mettre en place pour assurer la fermeture du couvercle technique du dispositif avec une pression suffisante sur le cadre 5, avant que l'ordre de soudure et / ou de vidage par aspiration ne soit donné au moyen de soudure 9 et / ou au moyen d'aspiration 10.

Pour éviter un effet d'écrasement voire de découpe du sac lors du cycle de soudure par suite d'une trop grande pression du couvercle technique du dispositif sur le cadre 5, on peut prévoir un montage flottant du moyen de soudure 9 dans le couvercle technique 12 du dispositif. Dans ce cas, lorsque le couvercle technique 12 vient en butée contre le cadre 5, le moyen de soudure 9 applique, sur les parties à souder du sac, une pression calibrée par des ressorts. Selon une autre possibilité, le moyen de soudure 9 est monté sur une plaque de mousse compressible.

Lorsque la fermeture du couvercle technique 12 est assurée avec un loquet (non représenté), ce loquet peut intégrer un ressort pour calibrer la pression de fermeture.

En variante, le moyen d'assemblage entre l'élément de paroi souple 8 et les parties du sac pour assurer une fermeture étanche peut être un scellage par pression. A cette fin, la matière du sac est localement ou totalement enduite de colle. La colle est activée par une pression suffisante créée par exemple par l'utilisateur avec un effet de levier, ou relayée électromécaniquement. Alternativement ou de manière complémentaire, la colle peut être protégée par un support à peler avant d'être appliquée pour réaliser le scellage.

Le moyen d'aspiration 10 peut être constitué par un simple aspirateur compact intégré propre à établir une dépression de l'ordre de - 0,1 bar à - 0,3 bar. Cet aspirateur permet d'extraire l'air entre les déchets sans les écraser. La dépression exercée par l'aspirateur n'est pas trop forte pour éviter les percements ou déchirures du sac.

Dans le cas d'applications hospitalières, un réseau de canalisations sous vide est généralement prévu dans l'établissement hospitalier. Le moyen d'aspiration du dispositif 1 peut alors être constitué par un simple raccord à brancher sur le réseau de vide.

En variante, au lieu de prévoir un aspirateur produisant une dépression relativement faible, on peut prévoir une pompe à vide pour augmenter la dépression par exemple vers 0,4 à 0,6 bar et réduire davantage le volume des déchets. La dépression doit toutefois rester cohérente avec l'épaisseur du sac pour éviter une déchirure du sac.

La zone d'aspiration correspond à l'ouverture 11 ménagée dans le couvercle technique du dispositif. Cette zone d'aspiration est notamment rectangulaire, carrée ou circulaire. La zone d'aspiration peut être une surface en amande afin de forcer la déformation puis l'ouverture de la valve V du sac. Le proche périmètre de la zone d'aspiration peut être creusé en cuvette afin de forcer la déformation puis l'ouverture de la valve d'aspiration V. On peut prévoir des rainures 11a autour de la zone d'aspiration dans la face inférieure du couvercle technique 12. Les rainures creusées sont rayonnantes autour de la zone d'aspiration 11. Lors de l'aspiration, le couvercle 8 du sac se conforme aux rainures. Si un élément volumineux dont l'enveloppe est étanche, par exemple une couche-culotte refermée sur elle-même, ou une poche plastique, vient se plaquer sur la zone d'aspiration, l'évacuation de l'air peut continuer à se faire malgré l'obturation de la zone d'aspiration centrale grâce aux rainures 11a.

Le couvercle 12 du support peut comporter un embout formé en entonnoir ou en pyramide tronquée qui est clipsé dans le trou d'aspiration 11 et qui peut être jeté après une période d'utilisation, par exemple une fois tous les dix sacs, ou une fois par jour. On empêche ainsi que des salissures souillent peu à peu la zone d'extraction d'air. En variante, au lieu de prévoir une ouverture 11, on prévoit un caisson d'aspiration creux qui ne comporte rien à l'intérieur, de sorte que la valve d'aspiration V ne peut toucher aucune paroi et ne peut donc pas la souiller, ni se souiller.

Un diffuseur de produit désinfectant 16 (Fig.6) est prévu pour envoyer régulièrement une dose désinfectante dans le circuit d'aspiration. Le diffuseur 16 peut être situé en amont ou en aval d'un filtre 17, ou remplacer le filtre. Le cycle de diffusion du produit désinfectant peut être activé à chaque aspiration, la diffusion étant déclenchée par la dépression elle-même. On peut ainsi empêcher que des salissures souillent peu à peu la zone d'extraction d'air et les tuyaux.

De préférence on prévoit le filtre 17 (Fig.6), notamment un filtre à particules, juste en aval de la sortie d'air du sac 2 et de la valve V. Le filtre est changé régulièrement par exemple par période de dix jours ou tous les cent sacs. Les pollutions sont piégées dans ce filtre et les composants du système qui se trouvent en aval, à savoir tuyau et aspirateur, restent toujours propres sans nécessiter d'intervention de nettoyage. Un type de filtre avantageux est le filtre HEPA (filtre à haute efficacité pour de l'air chargé de particules).

L'alimentation électrique du moyen de soudure 9 et du moyen d'aspiration 10 peut être effectuée à partir du secteur, généralement en 220 volts, avec un transformateur. En variante l'alimentation électrique peut être assurée par une batterie mobile par exemple sous 24 volts continu, 10 ampères.

Le support ou châssis 1 est constitué par une armature légère, tubulaire, sans carénage, de préférence montée sur roulettes masquées par les carters 14a. Il en résulte une facilité de nettoyage et une mobilité.

Le couvercle technique 12 du support regroupe le moyen d'aspiration et le moyen de soudure. Une électronique de contrôle, sous forme d'une carte électronique (non représentée), est logée de préférence dans le couvercle technique 12. La carte électronique est prévue pour gérer différents cycles :
- lorsque la fermeture, généralement manuelle, du couvercle technique 12 a eu lieu, et que l'utilisateur souhaite fermer le sac, il appuie sur un poussoir de la carte électronique pour lancer le cycle.
- la carte électronique donne un ordre de soudure de la feuille 8 sur le sac 2, pour fermer le sac 2 ;
- le cycle de soudure est déclenché et comprend une période de chauffe, notamment d'environ 3 secondes, suivi d'une pause, d'environ 3 secondes, afin de refroidir les soudures et d'éviter un déchirement des soudures dues à la traction produite par l'aspiration sur le sac,
- le cycle d'aspiration est ensuite déclenché avec une période d'aspiration d'environ 30 secondes ; un réglage de la durée d'aspiration est prévu pour permettre à chaque utilisateur de paramétrer le dispositif selon les déchets à traiter ; en variante le cycle d'aspiration peut être déclenché manuellement, l'utilisateur devant appuyer sur un bouton de commande et maintenir appuyé ce bouton pour que l'aspiration se poursuive ; la durée de l'aspiration est alors gérée par l'utilisateur, notamment grâce au contrôle visuel direct du comportement du sac et des déchets.

Lorsqu'un moyen est prévu pour faire exercer par le couvercle technique 12 une pression sur la zone de soudure pendant le cycle d'aspiration, on peut faire relâcher cette pression avant la fin de l'aspiration, notamment environ 5 secondes avant la fin, ce qui permet un léger déplacement du sac 2 et une aspiration complémentaire d'un volume résiduel d'air.

En variante illustrée sur Fig.7, le couvercle technique 12 et le moyen d'aspiration 10 forment une unité qui peut être séparée de la structure porteuse du sac. La séparation du couvercle technique muni du moyen de fermeture permet de créer un poste de fermeture pouvant gérer plusieurs supports 1 de sacs. Il en résulte une économie de moyens qui permettent de satisfaire aux besoins des zones à très forte contrainte d'hygiène. Cette structure est avantageusement combinable avec le principe de connexion au réseau du vide du centre de soin. La structure porteuse du sac est déconnectée du couvercle technique et n'a pas de couvercle.

Selon une variante, on ajoute à la structure porteuse déconnectée du sac un couvercle léger. Pour pouvoir amener la structure porteuse au poste de soudure, le couvercle léger doit être ouvert.

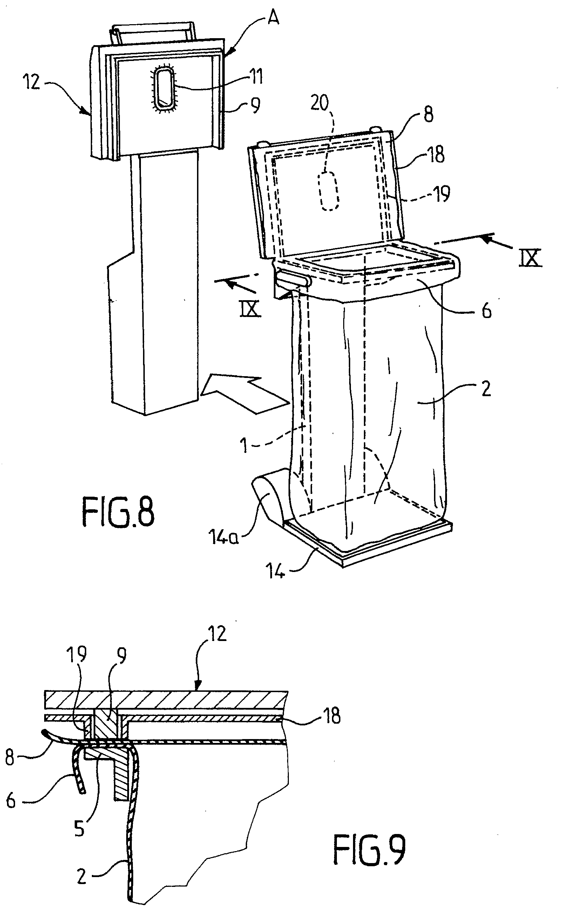

Selon une autre variante, selon Fig.8 ou 9, le support de sac 1 comporte un couvercle léger ajouré 18 articulé selon le bord transversal arrière. Ce couvercle 18 est ajouré, par exemple dans le fond d'une rainure 19 s'étendant sur trois côtés en U du couvercle 18. La rainure 19 est en correspondance avec le U du moyen de soudure 9 qui peut s'engager dans cette rainure 19 (Fig.9), Le couvercle léger 18 est prévu pour porter le couvercle 8 du sac tout en laissant agir au travers lui le moyen de soudure 9 selon Fig.9 et le moyen d'aspiration, grâce à un orifice 20 en correspondance avec l'orifice 11 du couvercle technique 12. Entre deux versements de déchets dans le sac 2, le couvercle léger 18 peut être refermé. Pour la soudure du couvercle 8 du sac sur le bord 6, la structure porteuse est positionnée sous le couvercle technique 12 avec son couvercle ajouré 18 fermé, puis le couvercle technique12 est rabattu et son moyen de soudure 9 traverse la rainure 19 et vient s'appuyer sur une zone du couvercle 8 appliquée contre le bord 6.

Selon une variante, le cadre support du sac peut être fixé à un mur.

Ceci étant, l'utilisation et le fonctionnement du dispositif de l'invention sont les suivants.

L'utilisateur, après avoir pris un sac 2 sous forme aplatie de stockage, l'ouvre comme illustré sur Fig.3, déplie le couvercle 8 et retourne les bords de l'ouverture 3 autres que celui servant de charnière au couvercle 8.

L'utilisateur fait passer le sac déplié dans l'ouverture du cadre 5 et engage les saillies opposées 5a du cadre dans les lumières 15 prévues en bordure du sac. Le couvercle de sac 8 est relevé sensiblement à la verticale et l'avancée 13 formant valve est engagée dans l'ouverture 11 du couvercle sans être complètement ouverte. La configuration est alors celle de Fig.5.

Les déchets hospitaliers sont déversés au fur et à mesure dans le sac 2 ainsi suspendu. Le couvercle est éventuellement refermé selon l'usage et le besoin. Lorsque le niveau de déchets atteint une hauteur déterminée, à distance suffisante de l'ouverture du sac, le couvercle technique12 est rabattu avec l'élément de fermeture 8 sur les parties 6 du sac recouvrant le cadre 5.

Un cycle de soudure est déclenché et le moyen de soudure 9 établit une soudure étanche de l'élément de fermeture 8 sur l'ouverture du sac.

Un cycle d'aspiration est ensuite effectué pour provoquer l'ouverture de la valve V et évacuer une partie du volume d'air contenu dans le sac 2. L'aspiration a lieu à travers l'élément de fermeture 8. Le volume du sac est réduit sans toutefois qu'un compactage violent soit exercé sur les déchets contenus dans le sac. Le coefficient de réduction du volume du sac est de l'ordre de 1,5 à 2 suivant la nature des déchets et le cycle de dépression. Lorsque l'aspiration cesse, la valve V se referme empêchant une entrée d'air dans le sac. Toutes ces opérations ont été effectuées sans que l'utilisateur ait eu à toucher des parties éventuellement souillées du sac.

Le débit du moyen d'aspiration 10 (de l'ordre de 50 à 500 l/minute, permet de déclencher l'ouverture de la valve d'aspiration et, dans un temps de traitement raisonnable, de vider l'air au-dessus du sac puis de vider l'air dans la plupart des cavités.

Le sac est ensuite retiré du cadre 5 et transporté à l'aide des poignées dans une zone de stockage.

Un sac neuf est ensuite mis en place pour une nouvelle opération de collecte.

Le dispositif de collecte convient non seulement pour les DASRI mais aussi pour de nombreux autres déchets tels que les couches-culottes, les non tissés utilisés dans les secteurs médicaux, ou dans les usines, ou dans la restauration, ou les déchets légers de restauration, en particulier gobelets, nappes en papier, assiettes en carton.

Le dispositif de collecte convient également à d'autres applications telles que les ordures ménagères, les feuilles, l'herbe coupée, le papier froissé ou déchiré de corbeilles de bureau, ou autres déchets faiblement résistants mécaniquement.

Le dispositif de collecte selon l'invention permet de réduire le volume des sacs de déchets à traiter en diminuant ou supprimant le volume d'air perdu en partie supérieure du sac, et en conformant les déchets faiblement résistants.

## Revendications

1. Sac jetable (2) en matière souple, notamment en matière plastique, pour un dispositif (1) de collecte de déchets, le sac présentant une ouverture (3) et un élément de paroi souple (8) de fermeture de l'ouverture du sac après remplissage, l'élément de paroi souple (8) constituant un prolongement d'une partie de la paroi du sac, et étant attenant à l'un des côtés de l'ouverture (3), **caractérisé en ce que** le sac stocké à plat présente une découpe (8a) déterminant la zone charnière de l'élément de paroi souple (8), le sac étant obtenu en une seule découpe, et l'élément de paroi souple (8) de fermeture constitue un couvercle de sac, rabattable avec un orifice (13), en particulier dans sa zone centrale, pour permettre une aspiration à travers l'élément de paroi souple (8) en position de fermeture.

2. Sac jetable selon la revendication 1, **caractérisé en ce qu'**il comporte une valve (V) prévue sur l'élément de paroi souple (8) de fermeture pour permettre un raccordement à un moyen d' aspiration (10, 11).

3. Sac jetable selon la revendication 2, **caractérisé en ce que** la valve (V) est constituée par une avancée (13), en deux dimensions lorsque le sac est à plat, ayant la forme d'un appendice sensiblement tronconique lorsqu'elle est déployée, ouverte à sa petite base et attenante par sa grande base à une paroi du sac, la valve empêchant une entrée d'air dans le sac après séparation du moyen d'aspiration (10, 11).

4. Sac jetable selon la revendication 2 ou 3, **caractérisé en ce que** la valve (V) est générée lors de la fabrication du sac, par la soudure et la découpe du sac (2).

5. Dispositif (1) pour collecter des déchets, notamment des déchets fortement compressibles et/ou des déchets hospitaliers d'activité de soins à risques infectieux ou similaires, comprenant un sac (2) selon la revendication 1, un cadre (5) sensiblement horizontal auquel est accroché le sac par au moins une partie du bord de l'ouverture du sac, et un moyen de fermeture (12, 18) du sac après remplissage, notament un couvercle technique (12) ou un couvercle léger (18),
- le moyen de fermeture (12, 18) coopérant avec l'élément de paroi souple (8),
- un moyen d'aspiration (10, 11) étant prévu pour évacuer une partie du volume d'air contenu dans le sac,
**caractérisé en ce que** l'aspiration (10, 11) est localisée sensiblement au centre de l'élément de paroi souple (8). ,

6. Dispositif pour collecter des déchets, selon la revendication 5, **caractérisé en ce que** :
- une valve (V) est prévue sur le sac pour permettre un raccordement au moyen d'aspiration (10, 11),
- la valve (V) est constituée d'un élément en deux dimensions quand le sac (2) est à plat, prenant la forme d'un élément sensiblement tronconique lorsqu'elle est déployée.

7. Dispositif selon l'une quelconque des revendications 5 à 6, **caractérisé en ce que** le moyen d'aspiration (10) est propre à créer une dépression au niveau d'une ouverture (11) prévue dans la face interne d'un couvercle technique (12), la zone d'aspiration correspondant à l'ouverture (11) étant une zone centrale du couvercle technique (12).

8. Dispositif selon l'ensemble des revendications 6 et 7, **caractérisé en ce que** la valve (V) est prévue dans la région centrale de l'élément de paroi souple (8) de fermeture, et l'ouverture (11) du couvercle technique (12) vient coiffer la valve (V).

9. Dispositif selon la revendication 7, **caractérisé en ce que** le couvercle technique (12) est rabattable sur le cadre et équipé d'un moyen d'assemblage (A) pour assurer la fermeture du sac par réunion de l'élément de paroi souple (8) à des parties (6) du sac.

10. Dispositif selon la revendication 6, **caractérisé en ce que** le moyen d'aspiration (10) comporte une trompe d'aspiration propre à entourer la valve (V) à l'état fermé et à provoquer son ouverture par une aspiration annulaire de la surface extérieure de la valve (V).

11. Dispositif selon la revendication 7, **caractérisé en ce que** le couvercle technique (12) et le moyen d'aspiration (10) forment une unité qui peut être séparée de la structure porteuse du sac (2).

12. Dispositif selon la revendication 11, **caractérisé en ce que** la structure porteuse est équipée d'un couvercle léger (18) qui est ajouré pour laisser agir un moyen de soudure (9).

13. Dispositif selon l'ensemble des revendications 7 et 9, **caractérisé en ce qu'**il comporte une carte électronique prévue pour commander, après fermeture du couvercle technique, un cycle comportant les étapes suivantes :
- un ordre de soudure de l'élément de paroi souple sur le sac est donné pour fermer le sac, l'élément de paroi souple (8) étant constitué par une feuille de la même matière plastique que le sac (2) ;
- le cycle de soudure est déclenché et comprend une période de chauffe, suivi d'une pause, afin de refroidir les soudures et d'éviter un déchirement des soudures dues à la traction produite par l'aspiration sur le sac,
- le cycle d'aspiration est ensuite déclenché, un réglage de la durée d'aspiration étant prévu pour permettre à chaque utilisateur de paramétrer le dispositif selon les déchets à traiter.

## Patentansprüche

1. Wegwerfbeutel (2) aus flexiblem Material, insbesondere aus Kunststoff, für eine Müllsammelvorrichtung (1), wobei der Beutel eine Öffnung (3) und ein flexibles Wandelement (8) zum Schließen der Beutelöffnung nach dem Befüllen aufweist, wobei das flexible Wandelement (8) eine Verlängerung eines Teils der Beutelwand bildet und an einer der Seiten der Öffnung (3) angrenzt, **dadurch gekennzeichnet, dass** der flach gelagerte Beutel einen Zuschnitt (8a) aufweist, der die Scharnierzone des flexiblen Wandelements (8) definiert, wobei der Beutel aus einem einzigen Zuschnitt gebildet ist, und das flexible Schließ-Wandelement (8) einen klappbaren Beuteldeckel mit einer insbesondere in seiner Mittelzone befindlichen Öffnung (13) bildet, um in der Schließposition ein Absaugen durch das flexible Wandelement (8) hindurch zu ermöglichen.

2. Wegwerfbeutel nach Anspruch 1, **dadurch gekennzeichnet, dass** er ein Ventil (V) aufweist, das an dem flexiblen Schließ-Wandelement (8) vorgesehen ist, um eine Verbindung mit einer Saugeinrichtung (10, 11) zu ermöglichen.

3. Wegwerfbeutel nach Anspruch 2, **dadurch gekennzeichnet, dass** das Ventil (V) durch einen im flachen Zustand des Beutels zweidimensionalen Vorsprung (13) gebildet ist, der im aufgefalteten Zustand die Form eines im Wesentlichen kegelstumpfförmigen Anhangs aufweist, der an seiner kleinen Basis offen ist und mit seiner großen Basis an einer Wand des Beutels angrenzt, wobei das Ventil das Eindringen von Luft in den Beutel nach dem Trennen der Saugeinrichtung (10, 11) verhindert.

4. Wegwerfbeutel nach Anspruch 2 oder 3, **dadurch gekennzeichnet, dass** das Ventil (V) bei der Herstellung des Beutels durch das Verschweißen und Zuschneiden des Beutels (2) gebildet wird.

5. Vorrichtung (1) zum Sammeln von Müll, insbesondere von stark komprimierbarem Müll und/oder Infektionsrisken tragendem klinischem Müll oder dergleichen, mit einem Beutel (2) nach Anspruch 1, einem im Wesentlichen horizontalen Rahmen (5), an dem der Beutel über mindestens einen Teil des Randes der Öffnung des Beutels befestigt ist, und einer Einrichtung (12, 18) zum Schließen des Beutels nach dem Befüllen, insbesondere einem technischen Deckel (12) oder einem leichten Deckel (18),
- wobei die Schließeinrichtung (12, 18) mit dem flexiblen Wandelement (8) zusammenwirkt,
- wobei eine Saugeinrichtung (10, 11) vorgesehen ist, um einen Teil des in dem Beutel enthaltenen Luftvolumens zu evakuieren,
**dadurch gekennzeichnet, dass** die Saugeinrichtung (10, 11) sich im Wesentlichen in der Mitte des flexiblen Wandelements (8) befindet.

6. Vorrichtung zum Sammeln von Müll nach Anspruch 5, **dadurch gekennzeichnet, dass**:
- ein Ventil (V) an dem Beutel vorgesehen ist, um eine Verbindung mit einer Saugeinrichtung (10, 12) zu ermöglichen,
- das Ventil (V) aus einem im flachen Zustand des Beutels (2) zweidimensionalen Element besteht, das im aufgefalteten Zustand die Form eines im Wesentlichen kegelstumpfförmigen Elements aufweist.

7. Vorrichtung nach einem der Ansprüche 5 bis 6, **dadurch gekennzeichnet, dass** die Saugeinrichtung (10) geeignet ist, einen Unterdruck an einer Öffnung (11) zu erzeugen, die in der Innenseite eines technischen Deckels (12) vorgesehen ist, wobei die der Öffnung (11) entsprechende Saugzone eine mittige Zone des technischen Deckels (12) ist.

8. Vorrichtung nach den Ansprüchen 6 und 7, **dadurch gekennzeichnet, dass** ein Ventil (V) im Mittelbereich des flexiblen Schließwandelements (8) vorgesehen ist und die Öffnung (11) des technischen Deckels (12) das Ventil (V) umgibt.

9. Vorrichtung nach Anspruch 7, **dadurch gekennzeichnet, dass** der technische Deckel (12) auf den Rahmen klappbar ist und mit einer Verbindungseinrichtung (A) zum Gewährleisten des Schließens des Beutels durch Verbinden des flexiblen Wandelements (8) mit Teilen (6) des Beutels versehen ist.

10. Vorrichtung nach Anspruch 6, **dadurch gekennzeichnet, dass** die Saugeinrichtung (10) einen Saugrüssel aufweist, der geeignet ist, das Ventil (V) im geschlossenen Zustand zu umschließen und dessen Öffnen durch ein ringförmiges Ansaugen der Außenfläche des Ventils (V) zu bewirken.

11. Vorrichtung nach Anspruch 7, **dadurch gekennzeichnet, dass** der technische Deckel (12) und die Saugeinrichtung (10) eine Einheit bilden, die von der Tragstruktur des Beutels (2) trennbar ist.

12. Vorrichtung nach Anspruch 11, **dadurch gekennzeichnet, dass** die Tragstruktur mit einem leichten Deckel (18) versehen ist, der durchbrochen ist, um das Arbeiten einer Schweißeinrichtung (9) zu ermöglichen.

13. Vorrichtung nach den Ansprüchen 7 und 9, **dadurch gekennzeichnet, dass** sie eine elektronische Platine aufweist, die vorgesehen ist, um nach dem Schließen des technischen Deckels einen Zyklus mit den folgenden Schritten zu steuern:
- Ausgeben eines Befehls zum Schweißen des flexiblen Wandelements an den Beutel, um den Beutel zu schließen, wobei das flexible Wandelement (8) aus einer Folie aus demselben Kunststoff wie der Beutel (2) gebildet ist;
- Starten des Schweißzyklus, der eine Erwärmungsperiode aufweist, gefolgt von einer Pause, um die Schweißnähte abzukühlen und ein Reißen der Schweißnähte aufgrund der Zugkraft, die durch das Saugen auf den Beutel ausgeübt wird, zu verhindern;
- anschließendes Starten des Saugzyklus, wobei eine Regelung der Saugdauer vorgesehen ist, um jedem Benutzer zu ermöglichen die Vorrichtung nach den zu verarbeitenden Abfällen zu parametrisieren.

## Claims

1. Disposable bag (2) made of flexible material, particularly of plastic, for a device (1) for collecting waste, the bag having an opening (3) and a flexible wall element (8) for closing the opening of the bag after filling, the flexible wall element (8) constituting an extension of part of the wall of the bag, and being adjacent to one of the sides of the opening (3), **characterized in that** the bag stored flat has a cutout (8a) determining the hinge zone of the element flexible wall (8), the bag being obtained by a single cut, and the element of flexible wall closure (8) constitutes a bag cover, which can be folded down with an orifice (13), in particular in its central zone, to allow succion through the flexible wall element (8) in the closed position.

2. Disposable bag according to claim 1, **characterized in that** it comprises a valve (V) provided on the flexible wall element (8) for closing to allow connection to a suction means (10, 11).

3. Disposable bag according to claim 2, **characterized in that** the valve (V) consists of a projection (13), in two dimensions when the bag is flat, having the shape of a substantially frustoconical appendage when it is deployed, open at its small base and adjoining by its large base to a wall of the bag, the valve preventing air from entering the bag after separation from the suction means (10, 11).

4. Disposable bag according to claim 2 or 3, **characterized in that** the valve (V) is generated during the manufacture of the bag, by heat-sealing and cutting the bag (2).

5. Device (1) for collecting waste, in particular highly compressible waste and / or hospital waste from healthcare activities with infectious risks or the like, comprising a bag (2) according to claim 1, a substantially horizontal frame (5) to which the bag is hung by at least part of the edge of the opening of the bag, and a means for closing (12, 18) of the bag after filling, in particular a technical cover (12) or a light cover (18),
- the closing means (12, 18) cooperating with the flexible wall element (8),
- a suction means (10, 11) being provided to evacuate part of the volume of air contained in the bag,
**characterized in that** the suction (10, 11) is located substantially in the center of the flexible wall member (8).

6. Device for collecting waste, according to claim 5, **characterized in that**:
- a valve (V) is provided on the bag to allow connection to the suction means (10, 11),
- The valve (V) consists of a two-dimensional element when the bag (2) is flat, taking the form of a substantially frustoconical element when it is deployed.

7. Device according to any one of claims 5 to 6, **characterized in that** the suction means (10) is capable of creating a depression at the level of an opening (11) provided in the internal face of a technical cover (12), the suction zone corresponding to the opening (11) being a central zone of the technical cover (12).

8. Device according to the set of claims 6 and 7, **characterized in that** the valve (V) is provided in the central region of the flexible wall element (8) for closing, and the opening (11) of the technical cover (12) covers the valve (V).

9. Device according to claim 7, **characterized in that** the technical cover (12) is hinged on the frame and fitted with assembly means (A) for closing the bag by joining the flexible wall member (8) to portions (6) of the bag.

10. Device according to claim 6, **characterized in that** the suction means (10) comprises a suction tube capable of surrounding the valve (V) in the closed state and of causing it to open by annular suction from the external surface of the valve (V).

11. Device according to claim 7, **characterized in that** the technical cover (12) and the suction means (10) form a unit which can be separated from the carrying structure of the bag (2).

12. Device according to claim 11, **characterized in that** the structure carrier is equipped with a light cover (18) which is perforated to leave on a heat-sealing means (9).

13. Device according to claims 7 and 9 together, **characterized in that** it comprises an electronic card intended to control, after closing the technical cover, a cycle comprising the following steps:
- a heat-sealing order of the flexible wall element on the bag is given to close the bag, the flexible wall element (8) being constituted by a sheet of the same plastic material as the bag (2),
- the heat-sealing cycle is triggered and includes a heating period, followed by a break, in order to cool the seals and avoid tearing the seals due to the traction produced by the suction on the bag,
- the suction cycle is then triggered, an adjustment of the suction duration being provided to allow each user to configure the device according to the waste to be treated.
